(19)

Europäisches
Patentamt
European
Patent Office
Office européen
des brevets

(11) **EP 2 031 592 A1**

(12) **EUROPEAN PATENT APPLICATION**

(43) Date of publication:
**04.03.2009 Bulletin 2009/10**

(51) Int Cl.:
*G11B 20/00* (2006.01)  *G11B 20/12* (2006.01)
*G11B 19/12* (2006.01)  *G11B 27/24* (2006.01)

(21) Application number: **08163323.2**

(22) Date of filing: **29.08.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **30.08.2007 US 966917 P**

(71) Applicant: **DTR Limited
Tsimshatsui, Kowloon
Hong Kong (CN)**

(72) Inventor: **Torbarac, Mario
Rozelle, New South Wales CN-2039 (AU)**

(74) Representative: **Ketelaars, Maarten F.J.M.
Nederlandsch Octrooibureau
Postbus 29720
2502 LS Den Haag (NL)**

(54) **Method and system for recordable DVDs**

(57)     Methods, systems and computer program products for causing recordable DVD storage media to be identified as non-recordable DVD storage media by a DVD drive are described. Data used to identify a recordable DVD storage media (100) as being recordable is occluded (step 190) to prevent correct retrieval from the recordable DVD storage media by the DVD drive. As a consequence, the DVD drive incorrectly identifies the recordable DVD storage media (100) as non-recordable DVD storage media.

FIG. 1

**Description**

Related Applications

The present application claims priority from U.S. Provisional Patent Application No. 60/966,917 filed on 30 August 2007. The present application is also related to U.S. Provisional Patent Application No. 60/781,631 filed on 13 March 2006, and International Patent Application No. PCT/AU2007/000306 filed on 12 March 2007. The entire contents of U.S. Provisional Patent Application No. 60/966,917 and U.S. Provisional Patent Application No. 60/781,631 and International Patent Application No. PCT/AU2007/000306 are incorporated herein by way of reference.

Technical Field

The present invention relates generally to Digital Video or Versatile Disk (DVD) technology and more particularly to the identification of recordable and non-recordable DVD storage media by conventional DVD drives.

Background

Data or content is recorded on DVDs in a spiral track on the surface of the disc. Retrieval of the content stored on a DVD involves optically reading pits and lands on the disc using a laser, which entails following the spiral track and providing pit-to-land and land-to-pit transitions as a high frequency (HF) signal to a decoder. The decoder demodulates the HF signal from eight-to-sixteen modulation (EFM+) into a bit stream that is subsequently de-interleaved, error corrected using Reed Solomon Product Code (RSPC) and de-scrambled. Scrambling is employed to minimize excessive high frequencies (HF) and occurrences of high Digital Sum Value (DSV) or DC content accumulation. Thereafter, the data is subjected to error detection code (EDC) checking. Once the bit stream is correctly decoded and it has been ascertained that there are no errors, CSS decryption is performed (if the content is encrypted) using valid authentication and cryptographic keys. Finally, the bit stream is passed to various decode buffers in the video player for processing and/or output of the video, audio and control data streams.

The Content Scramble System (CSS) is a Digital Rights Management (DRM) scheme that provides a means for protecting content on commercially produced DVD-video discs using encryption and authentication. Descrambling requires a pair of cryptographic keys. One key is unique to the disc, while the other key is unique to the content being descrambled. The keys are stored in hidden areas of the disc, which can be read by CSS compliant drives. The CSS key sets are licensed to manufacturers by the DVD Copy Control Association (DVD CCA) for incorporation into products such as DVD drives or players and DVD movie releases.

Upon loading of DVD storage media, a conventional DVD drive typically identifies the media type for selecting the appropriate calibration and encoding mechanism required to process the particular media type. For example, the size of the DVD storage media loaded may be determined (DVDs are commonly available in diameters of 8cm and 12cm) by seeking to a radial location outside the physical limits of an 8cm DVD but inside the physical limits of a 12cm DVD. Detection of reflectivity at that location is indicative that a 12cm DVD has been loaded and the appropriate calculations for physical to logical translations to determine data positioning on the DVD media can thus be performed. Thereafter, the DVD drive may determine the format of the DVD storage media loaded. DVD storage media is produced in a variety of formats, including DVD-ROM, DVD-R, DVD+R, DVD-RW, DVD+RW, DVD-RAM and HD-DVD. DVD-ROM, the original DVD standard, is a read-only format. DVD-R and DVD+R are recordable formats that are limited to one-time data recording only. In other words, DVD-R and DVD+R discs were not designed to be recorded onto a second time. On the other hand, DVD-RW and DVD+RW are re-recordable formats that allow recorded data to be written over numerous times. Each of the foregoing formats can be read by most commercially available DVD ROM drives. Additionally, DVDs are generally available as a dual or double layer disc, thus providing approximately double the storage capacity of the corresponding single layer versions. DVD-RAM discs, which can be re-recorded numerous times and are typically housed in cartridges, are compatible only with DVD drives that support the DVD-RAM format. The high definition format DVD (HD-DVD) provides a significantly greater storage capacity than the foregoing formats. The two most prominent HD-DVD formats are Blu-ray Disc (BD) and Advanced Optical Disc (AOD).

The spiral track of recordable DVD storage media comprises a slight sinusoidal deviation from a perfect spiral, which is used to encode speed information. The sinusoidal deviation corresponds to a "wobble frequency" that is used to identify the type or format of the recordable DVD storage media. For example, the DVD- ("DVD minus") standard defines a wobble frequency of about 140.6 KHz with addressing information stored in "Land Pre Pits" that correspond to amplitude spikes in the wobble frequency signal. The DVD+ ("DVD plus") standard defines a wobble frequency of about 817.4 KHz with addressing and speed information stored as phase inversions in the wobble frequency signal. This is known as Address in Pre-groove (ADIP). The necessary information can thus be obtained from the wobble frequency signal to enable the DVD drive to correctly track and focus on the blank recordable DVD media and maintain control of the speed of rotation of the DVD to ensure that the EFM+ signal is accurately written to the DVD.

Numerous commercially available DVD drives are unable to correctly mount and/or process recordable DVD storage media that have CSS protected content stored thereon. This may be due to a DVD CCA licensing requirement that DVD drives be rendered unable to process CSS protected content on recordable DVD storage media. As a consequence, the chipsets of certain CSS compliant drives appear to be programmed to fail upon detection of CSS protected content stored on recordable DVD storage media.

It is anticipated that the DVD CCA's licensing restrictions in relation to CSS content stored on recordable DVD storage media may be relaxed in the future. Accordingly, a need exists for methods and systems that enable conventional and/or commercially available DVD drives to retrieve CSS protected content from recordable DVD storage media.

Summary

An aspect of the present invention provides a method for causing recordable DVD storage media to be identified as non-recordable DVD storage media by a DVD drive. The method comprises occluding data used to identify the recordable DVD storage media as being recordable from being correctly retrieved from the recordable DVD storage media by the DVD drive. The occluded data may comprise a predefined wobble frequency.

In certain embodiments, the data is occluded by masking a portion of an optical surface of the recordable DVD storage media.

In other embodiments, the data is occluded by writing a data sequence to an area on the recordable DVD storage media which comprises data storage locations useable by the DVD drive to determine whether the DVD storage media is recordable or non-recordable. The density of EFM+ encoding of the data sequence to be written to the recordable DVD storage media may be altered.

The masked portion or area written to may comprise an Inner Drive Area and/or a Lead-In Zone of the recordable DVD storage media. In one particular embodiment, the masked portion or area written to comprises all data storage locations that precede a content data area (i.e., the Data Zone) of the DVD storage media.

In other embodiments, the data sequence is written to an area on a first layer of the recordable DVD storage media, and the same or another data sequence is written to an area on a second layer of the recordable DVD storage media. The areas on the first and second layers are adjacent to each other and may be directly above or below each other.

In other embodiments, the data is occluded by writing a data sequence to an area on the recordable DVD storage media which is adjacent to data storage locations useable by the DVD drive to determine whether the DVD storage media is recordable or non-recordable. The area may be located on a different layer of the recordable DVD storage media to the data storage locations and may be directly above or below the data storage locations.

The data sequence may comprise one or more predefined data sequence/s from the group of predefined data sequences consisting of: a Digital Sum Value (DSV) generating data sequence, a High Frequency (HF) noise generating data sequence and a data sequence (C3PO) that causes localized heating and consequent pit overexposure in the DVD storage media.

Another aspect of the present invention provides a computer system for causing recordable DVD storage media to be identified as non-recordable DVD storage media by a DVD drive. The computer system comprises: a memory unit for storing data and instructions to be performed by a processing unit; a DVD unit for writing data to recordable DVD storage media; and a processing unit coupled to the memory unit and the DVD unit. The processing unit is programmed to occlude data used to identify the recordable DVD storage media as being recordable from being correctly retrieved from the recordable DVD storage media by the DVD drive. The processing unit may be programmed to occlude the data by causing the DVD unit to write a data sequence to an area on the recordable DVD storage media comprising data storage locations useable by the DVD drive to determine whether the DVD storage media is recordable or non-recordable.

Another aspect of the present invention provides a computer program product comprising a computer readable medium comprising a computer program recorded therein for causing recordable DVD storage media to be identified as non-recordable DVD storage media by a DVD drive. The computer program product comprises computer program code means for occluding data used to identify the recordable DVD storage media as being recordable from being correctly retrieved from the recordable DVD storage media by the DVD drive. The computer program code means may occlude the data by causing a data sequence to be written to an area on the recordable DVD storage media comprising data storage locations useable by the DVD drive to determine whether the DVD storage media is recordable or non-recordable.

Brief Description of the Drawings

A small number of embodiments are described hereinafter, by way of example only, with reference to the accompanying drawings in which:

Fig. 1 is a schematic layout diagram of a recordable DVD+R disk for describing embodiments of the present invention;
Fig. 2a is a pictorial representation of a portion of a DVD-R/RW disk;
Fig. 2b is a pictorial representation of a portion of a DVD+R/RW disk;
Fig. 3 is a flow diagram of a method for encoding data into ECC blocks for writing to an optical disk or DVD; and
Fig. 4 is a schematic block diagram of a computer system with which embodiments of the present invention may be practised.

Detailed Description

Embodiments of methods and systems are described hereinafter for causing recordable DVD storage media to be identified as non-recordable DVD storage media by conventional and/or commercially available DVD drives or players.

Certain of the embodiments described hereinafter are described with specific reference to the DVD-ROM disc. However, it is not intended that the present invention be limited in this manner as the principles of the present invention have general applicability to other types and/or formats of DVD. Some examples of disk types and/or formats with which embodiments of the present invention may be practised include, but are not limited to: DVD-R, DVD+R, DVD-RW, DVD+RW, DVD-RAM, HD-DVD, UMD (Universal Media Disc), HD-DVD (High Definition DVD) and BD-ROM (BluRay). Certain of the embodiments described hereinafter are described with specific reference to the CSS encryption system. However, those skilled in the art will appreciate that the present invention may also be practised in conjunction with other types of encryption systems.

Specifications relating to encoding of DVDs of various types and formats have been published by the European Computer Manufacturers Association (ECMA). Relevant examples include, but are not limited to:

| | | |
|---|---|---|
| DVD-ROM (120 mm) | : | Standard ECMA-267, 3rd edition, April 2001 |
| DVD-ROM (80 mm) | : | Standard ECMA-268, 3rd edition, April 2001 |
| DVD-RAM (120 mm) | : | Standard ECMA-272, 2nd edition, June 1999 |
| DVD+RW (120 mm) | : | Standard ECMA-274, 2nd edition, June 1999 |
| DVD-R (80, 120 mm) | : | Standard ECMA-279, December 1998 |
| DVD-RAM (80, 120 mm) | : | Standard ECMA-272, 3rd edition, June 2005 |
| DVD+RW (80, 120 mm) | : | Standard ECMA-337, 3rd edition, Dec. 2005 |
| DVD-RW (80, 120 mm) | : | Standard ECMA-338, December 2002 |
| DVD+R (80, 120 mm) | : | Standard ECMA-349, 3rd edition, Dec. 2005 |

The above and other relevant specifications are incorporated herein by reference and are available online at the URL: http://www.ecma-international.org/publications/index.html

Certain of the embodiments described hereinafter make specific reference to the DVD-ROM standard, i.e., ECMA-267. However, those skilled in the art will appreciate that other ECMA specifications relating to encoding of DVDs of various types and formats may, in many cases, alternatively have been referred to. For example, the conversion tables for EFM+ modulation are common to each of the above ECMA specifications relating to encoding of DVDs. However, HD-DVD and BluRay do not utilize EFM+ modulation.

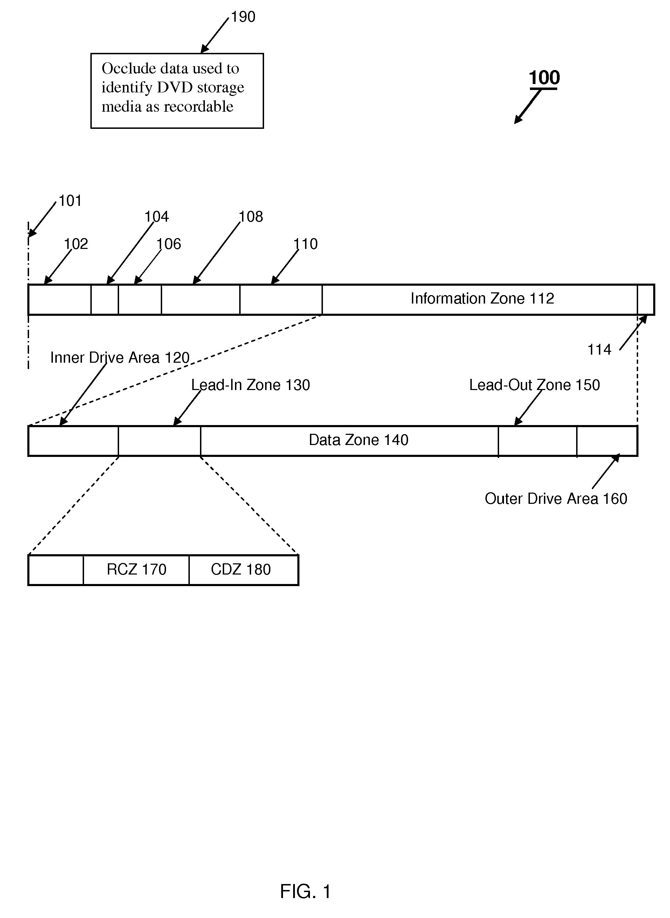

Fig. 1 is a schematic layout diagram of a recordable DVD+R disk 100, including two exploded views. More specifically, Fig. 1 shows one half of the recordable DVD+R disk 100 in a cross sectional representation from the disk centre 101 to the rim area 114, including the central disk hole 102, the first and second transition areas 104 and 106, the clamping zone 108, the third transitional area 110, the Information Zone 112 and the rim area 114. An exploded view of the Information Zone 112 shows the Inner Drive Area 120, the Lead-In Zone 130, the Data Zone 140, the Lead-Out Zone 150 and the Outer Drive Area 160. An exploded view of the Lead-In Zone 130 shows the Reference Code Zone (RCZ) 170 and the Control Data Zone (CDZ) 180. Buffer zones, which follow each of the RCZ 170 and the CDZ 180, are not shown in Fig.1.

The physical distance from the disk centre 101 to the start of the Inner Drive Area 120 is about 22mm. The Inner Drive Area 120 starts at about physical sector number (PSN) 0x23000, which may vary due to manufacturing differences or tolerances. The Inner Disk Test Zone and the Inner Disk Count Zone, both of which are not shown in Fig. 1, are located in the Inner Drive Area 120. The Lead-In Zone starts at PSN 0x2A480. The RCZ 170 and the CDZ 180 are located in the Lead-In Zone and start at PSN 0x2f000 and PSN 0x2f200, respectively. The Data Zone 140 starts at PSN 0x30000.

It should be noted, however, that certain of the starting PSNs may vary for other recordable DVD formats. It is generally preferable to quote PSNs as opposed to physical distance from the disk centre 101 as the exact physical location of a PSN changes from disk to disk as a result of being dependent upon factors such as physical disk tolerances and encoding speed and density.

Generally, after performing diameter and reflectivity checks, a DVD drive seeks into a specific area of loaded or mounted DVD storage media to detect and lock onto a sinusoidal wobble frequency. For example, certain DVD drives seek into the lead-in zone for this purpose and others seek into the inner drive area. Some DVD drives may even seek into the Data Zone 140 for this purpose. If the loaded DVD is recordable, the wobble frequency detected will indicate the format or type of the loaded recordable DVD. For example, DVD-R and DVD-RW exhibit a wobble frequency of about 140.6 KHz, whereas DVD+R and DVD+RW exhibit a wobble frequency of about 817.4 KHz. If the loaded DVD is non-recordable (e.g., a pressed DVD), a wobble frequency will not be detectable. As a consequence, the present inventor has recognized that most, if not all, conventional and/or commercially available DVD drives can be fooled into detecting a recordable DVD as a non-recordable DVD by preventing the DVD drive from detecting a wobble frequency signal.

Block 190 represents the step of occluding data used to identify the recordable DVD storage media as recordable. Various embodiments for performing step (block) 190 are described hereinafter.

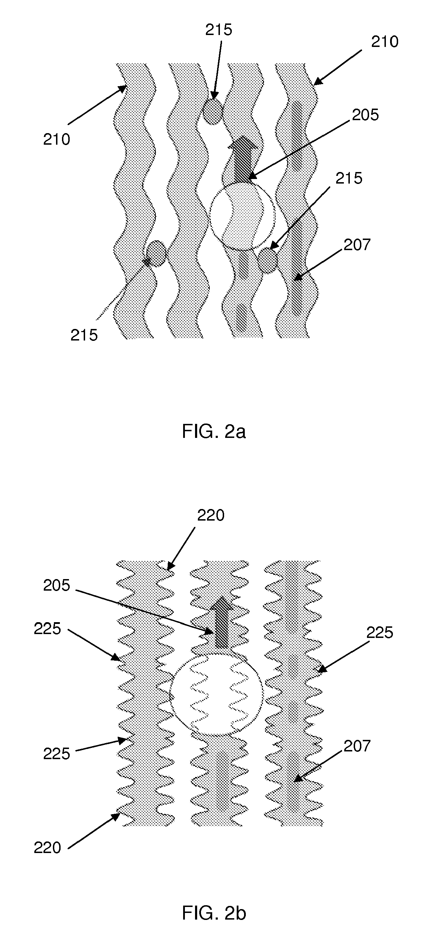

Fig. 2a is a pictorial representation of a portion of a DVD-R/RW disk showing tracks having a sinusoidal wobble frequency signal 210 and a number of Land Pre Pits 215. The Land Pre Pits 215 cause amplitude spikes in the wobble frequency signal 210, which are used for encoding addressing information. The wobble frequency signal 210 is used for tracking and spindle (linear velocity) control. Fig. 2a also shows pits or marks 207 in the tracks and an arrow 205, which is representative of advancement of an optical read/write head along a track.

Fig. 2b is a pictorial representation of a portion of a DVD+R/RW disk showing tracks having a sinusoidal wobble frequency signal 220 with addressing and speed information encoded as signal polarity phase inversions 225 in the wobble frequency signal 220. This is known as Address in Pre-groove (ADIP). Fig. 2b also shows pits or marks 207 in the tracks and an arrow 205, which is representative of advancement of an optical read/write head along a track.

Embodiments of the present invention enable recordable DVD storage media to be identified as non-recordable DVD storage media by conventional or commercially available DVD drives. This is achieved by occluding data used to identify the DVD storage media as being recordable from being correctly retrieved from the recordable DVD storage media by the DVD drive. As described hereinbefore, the occluded data typically comprises a predefined wobble frequency used by the DVD drive to identify the DVD storage media as recordable. In the case of DVD-R/RW media, the occluded data may alternatively or additionally comprise Land Pre Pit (LPP) data. Incorrect retrieval of the LPP data results in the DVD drive being unable to detect the wobble frequency.

In certain embodiments, the data is occluded by writing a data sequence to an area on the recordable DVD storage media, which comprises data storage locations useable by a conventional or commercially available DVD drive to determine whether the DVD storage media is recordable or non-recordable. The data sequence causes the DVD drive to identify the recordable DVD storage media as non-recordable DVD storage media based on the DVD drive being unable to detect a predefined wobble frequency.

The data sequence may be written to the Inner Drive Area 120 of the DVD storage media, which extends from a physical sector number of about 0x23000 to a physical sector number of 0x2A479 and comprises the Inner Drive Test Zone and Power Calibration Areas. The data sequence may alternatively or additionally be written to the Lead-In Zone 130 or a portion of the Lead-In Zone 130 of the DVD storage media, which extends from physical sector number 0x2A480 to physical sector number 0x2efff. In certain embodiments, the area that the data sequence is written to comprises the Inner Drive Area 120 and the Lead-In Zone 130 of the DVD storage media, and may even extend into the Data Zone 140 (i.e., the content data area) of the DVD storage media. However, it is generally preferable not to write the data sequence to the Reference Control Zone (RCZ) 170 and the Control Data Zone (CDZ) 180, as this may adversely affect normal disk operation. In one particular embodiment, the data sequence is written only to all the data storage locations preceding the Reference Control Zone (RCZ) 170 on the DVD storage media.

A potential problem exists for DVD-R or DVD-RW disks with CSS protected content stored thereon when the Control Data Zone (CDZ) is overwritten with the data sequence. This is due to the fact that the player and title cryptographic keys for CSS decryption are stored in the Control Data Zone (CDZ). As a consequence, a DVD drive will be unable to retrieve the correct player and title cryptographic keys for decrypting the CSS content. However, the present inventor has recognized that the cryptographic key areas can be written to the DVD just before or after the overwritten areas (e.g., the CDZ) as the DVD drive will step through the overwritten area until it locates the valid key areas that have been relocated. Even though the physical location on the DVD does not match the logical block address (LBA), the DVD drive will adjust or step the position of the optical pick-up until it finds a location that matches the requested ID, even though it has been relocated to an alternate physical location. An illustration follows:

Before overwriting:

```
0x2e000                        0x2f000                    0x30000
<=======================] [================] [================>
Lead-in                        RCZ+CDZ                    Data Zone
```

After overwriting and relocation:

```
0x2e000                          0x2f000                    0x30000
<======] [AAAAAAAA] [XXXXXXXXXXXX] [BBBBBB] [======>
Lead-in                          RCZ+CDZ                    Data Zone
```

where:

- X represents the overwritten areas of the original CDZ;
- A represents the new CDZ written before the CDZ is overwritten with valid keys and misreported ID to be in the range of the original CDZ (i.e., 0x2f000 - 0x2ffff); and
- B represents the new CDZ written after the CDZ is overwritten with valid keys and misreported ID to be in the range of the original CDZ (i.e., 0x2f000 - 0x2ffff).

The overwriting destroys the original key area in the CDZ (which comprises zero's). The before and after portions comprise the CSS cryptographic key data that will be located and retrieved by the DVD drive when it attempts to read the CDZ on the DVD.

In one particular embodiment, content (e.g., CSS protected content) is written to the DVD storage media in the usual manner in accordance with the relevant ECMA standard/s. Thereafter, all writable locations of the DVD storage media preceding the Reference Code Zone (RCZ) are overwritten with one or more predetermined data sequences, such as DSV, HF and/or C3PO generating data sequences, as described hereinbefore.

The ECMA specifications for Optical Disks dictate that the 8-bit bytes of each Recording Frame are transformed into 16-bit Code Words with the run length limitation that between 2 ONEs there shall be at least 2 ZEROs and at most 10 ZEROs (RLL 2, 10). The specifications provide conversion tables to be applied in the modulation process to guarantee the foregoing run length limitation. For example, the conversion tables are provided in Annex G of the ECMA-267 specification and as other annexes of some of the other specifications. The Main Conversion table and the Substitution table specify a 16-bit Code Word for each 8-bit byte with one of 4 states. For each 8-bit byte, the tables indicate the corresponding Code Word, as well as the State for the next 8-bit byte to be encoded.

Digital Sum Value (DSV) accumulation or DC content (bias) accumulation results from an unequal number of low states compared to high states (pit to land transitions and visa versa) read during playback of a DVD. Excessive DSV accumulation typically results in similar effects to those caused by scratches and other imperfections on the data read-back side of a DVD. For example, even moderate amounts of DSV accumulation slows down the data retrieval or playback process. More excessive levels of DSV accumulation result in unreliable tracking of the pits and lands and decoding of the pit and land lengths, which may result in a complete loss of signal in an area on the DVD. It should be noted that DSV is an artifact of the DVD modulation process and that a certain level of DSV is thus always present. However, ECMA-267 and other specifications go to significant lengths to minimize the amount of DSV present on DVD media. According to the ECMA-267 specification, "During the DSV computation, the actual values of the DSV may vary between -1000 and +1000, thus it is recommended that the count range for the DSV be at least from -1 024 to +1 023". DSV values greater than 1,024 are thus likely to result in unreliable tracking.

HF noise results from a high rate of pit-to-land and land-to-pit transitions during data retrieval or playback. It should be noted that HF is a totally different phenomenon to DSV accumulation, but the resulting effect during data retrieval is the same. In fact, the effective DC content or bias is typically zero or close to zero as a result of HF noise. HF noise is an artifact of the DVD encoding process and a certain level of HF noise is thus always present. Excessive levels of HF noise result in unreliable tracking of the pits and lands and decoding of the pit and land lengths, which may result in a complete loss of signal in an area on the DVD.

In the normal course, the laser beam in an optical disk writer is pulsed at varying intensities and/or duty cycles to generate the required encoded marks/spaces that constitute the encoded content. For the case of a DVD, these encodings are in EFM+ and are usually referred to as pits and lands in the case of pressed media and as marks and spaces in the case of recordable media. The minimum mark or space length on a DVD is T3, which represents an effect that is 3 time intervals in duration. The maximum mark or space length on a DVD (due to RLL constraints imposed by the EFM+ standard) is generally T11. However, T 14 is a notable exception as it is only used to denote the presence of a synchronization symbol (SYNC). C3PO is based upon valid EFM+ data streams comprising repeated marks of long duration separated by spaces of short duration. An optimal situation would be a T11 mark followed by T3 space in a repeated fashion. This high ratio of ON periods to OFF periods results in an accumulation of localized heating at the disc substrate and will, in very short order, create over exposure of the marks or pits at the expense of the spaces. The resulting effect is that the T11 length marks drift in length due to the exposure at a rate roughly in proportion to the duration of the sequence. It has been observed that, after some repetition and consequent accumulated local heating, the intended T11's are elongated to become closer to T12's (which are outside the specified requirements). This is at the expense of the following T3's, which become closer to T2's (which are, again, outside the specified requirements). The resulting effect is that of instability and erroneous data or content retrieval from the DVD storage media. C3PO may also be used to affect data written to the disk track in close proximity to the overexposed regions. For example, if an overexposing sequence is written to the disk, apart from causing the pit to extend in length (such as a T11 becoming a T12), the width of the pit or mark can also be overexposed to cause the pit to overlap its track spiral boundary and thus affect the two tracks located radially on either side of the track having the overexposed pit. The resulting effect is a loss of focus and/or tracking during data retrieval from the DVD storage media.

Due to the overexposure properties of C3PO, the production of extra wide marks (pits) on a disc surface can obscure the Land Pre Pits (LPP) on DVD-R recordable media and thereby hinder or prevent reproduction. LPPs are used (in conjunction with the wobble signal) to encode important addressing information for the writing device. Therefore, the ability to hinder or prevent retrieval of the LPP information assists in preventing detection of recordable media by a conventional and/or commercially available DVD drive during disc detection.

In embodiments of the present invention, one or more predetermined data sequence/s is/are written to recordable DVD storage media. The predetermined sequence/s is/are written to areas or data storage locations on the recordable DVD storage media where DVD drives may attempt to detect a wobble frequency signal. Such predetermined data sequence/s may, for example, include one or more of DSV accumulation, HF noise generating, and/or Content Controlled Cumulative Pit Overexposure (C3PO) data sequences. In other words, a predetermined data sequence may comprise one of a DSV accumulation, HF noise generating, and/or Content Controlled Cumulative Pit Overexposure (C3PO) data sequence or any combination of such data sequence types. The resultant effect is that the DVD drive is caused to lose focus or tracking while attempting to detect a wobble frequency signal. The DVD drive is thus unable to detect a wobble frequency signal and assumes that the loaded DVD storage media is non-recordable.

The predetermined data sequences comprise legitimate Code Words from the Main Conversion Table in the ECMA specifications. The present inventor has identified a number of Code Words in the Main Conversion Table that, when optically read repeatedly, are capable of generating a sufficient level of DSV accumulation, HF and/or C3PO to cause failure (e.g., loss of tracking) during data or content retrieval. Data bytes that correspond to the identified Code Words for causing DSV accumulation (prior to EFM+ modulation) include: 0x83, 0x87, 0x8e, 0x89, 0x95 and 0x9e. The foregoing data bytes may be repeated and/or combined in any combination to form a data sequence of length sufficient to cause failure (e.g., loss of tracking) during data retrieval. The length of data sequence necessary to cause data retrieval failure (e.g., failure to detect a wobble frequency) varies for different commercially available DVD drives. Illustrative examples of the following data sequences are presented hereinafter:

- 0x95
- 0x5cc5 (or 0xc55c)
- 0x8995 (or 0x9589)
- 0x8e9e (or 0x9e8e)
- 0x959e (or 0x9e95)

*Example 1: 0x95 ($149_{10}$)*

Table 1, hereinafter, shows the results (i.e., Code Words) of looking up the 8-bit byte 0x95 in the Main Conversion table:

TABLE 1

| | State 1 | | State 2 | | State 3 | | State 4 | |
|---|---|---|---|---|---|---|---|---|
| | Code Word | | Code Word | | Code Word | | Code Word | |
| 149 | 0000100100010000 | 3 | 0000100100010000 | 3 | 1000000000100000 | 3 | 1000000000100000 | 3 |

Referring to Table 1, four 16-bit Code Words (corresponding to four different states), each followed by a next state, are provided. Significantly, the next state is always 3, irrespective of the present state, and the 8-bit byte 0x95 thus reselects state 3 repeatedly.
The state 3 Code Word is 1000000000100000, which comprises a pit length of 10 bits followed by a land length of 5 bits (a binary 1 in the Code Word is indicative of a change of state, whereas a binary 0 is indicative of a state being maintained), may be represented as [t10, t5+]. The addition sign (+) after the t5 refers to the first bit if the next Code Word, which is a binary 1. The total cumulative DSV for two successive 0x95 8-bit bytes is:

$$t10, t6, t10, t6$$
$$= +20, -12$$
$$= +8$$

This single byte represents a high value of DSV accumulation relative to that produced by other allowable modulation sequences specified in the Main Conversion table. Coupled to the fact that the 8-bit byte 0x95 always reselects state 3, the 8-bit byte 0x95 represents an ideal single byte case for generating DSV accumulation.

*Example* 2: *0xc5 (197$_{10}$) and 0x5c (92$_{10}$)*

Table 2, hereinafter, shows the results (i.e., Code Words) of looking up the 8-bit bytes 0xc5 and 0x5c in the Main Conversion table:

TABLE 2

|  | State 1 | | State 2 | | State 3 | | State 4 | |
| --- | --- | --- | --- | --- | --- | --- | --- | --- |
|  | Code Word | | Code Word | | Code Word | | Code Word | |
| 197 | 0010001000000100 | 2 | 0010001000000100 | 2 | 1000001000000100 | 2 | 1000001000000100 | 2 |
| 92 | 0010000100001000 | 3 | 0100000000010001 | 1 | 0010000100001000 | 3 | 0100000000010001 | 1 |

Referring to Table 2, four 16-bit Code Words (corresponding to four different states), each followed by a next state, are provided. Significantly, the next state after state 1 of the 8-bit byte 0xc5 is 2 and the next state after state 2 for the 8-bit byte 0x5c is state 1.Thus, the sequence of 8-bit bytes 0xc5 and 0x5c reselects states 2 and 1 repeatedly. The state 1 Code Word for the 8-bit byte 0xc5 is 0010001000000100 [t3+, t4, t7, t2+] and the state 2 Code Word for the 8-bit byte 0x5c is 0100000000010001 [t2+, t10, t4]. The total cumulative DSV for the sequence of 8-bit bytes 0xc55c or 0x5cc5 is:

$$t3, t4, t7, t4, t10, t4$$

$$= +20, -12$$

$$= +8$$

This two byte sequence provides a high value of DSV accumulation relative to that produced by the other allowable modulation sequences specified in the Main Conversion Table.

*Example* 3: *0x89 (137$_{10}$) and 0x95 (149$_{10}$)*

Table 3, hereinafter, shows the results (i.e., Code Words) of looking up the 8-bit bytes 0x89 and 0x95 in the Main Conversion table:

TABLE 3

| | State 1 | | State 2 | | State 3 | | State 4 | |
|---|---|---|---|---|---|---|---|---|
| | Code Word | | Code Word | | Code Word | | Code Word | |
| 137 | 0000100001000100 | 2 | 0000100001000100 | 2 | 1000001001000100 | 3 | 1000001001000100 | 3 |
| 149 | 0000100100010000 | 3 | 0000100100010000 | 3 | 1000000000100000 | 3 | 1000000000100000 | 3 |

Referring to Table 3, four 16-bit Code Words (corresponding to four different states), each followed by a next state, are provided. Significantly, the next state after state 3 for the 8-bit byte 0x89 is state 3 and the next state after state 3 of the 8-bit byte 0x95 is also state 3. Thus the sequence of 8-bit bytes 0x89 and 0x95 reselects state 3 repeatedly. The state 3 Code Word for the 8-bit byte 0x89 is 1000001001000100 [t6, t3, t4, t2+] and the state 3 Code Word for the 8-bit byte 0x95 is 1000000000100000 [t10, t5+]. The total cumulative DSV for the sequence of 8-bit bytes 0x8995 or 0x9589 is:

$$t6, t3, t4, t2+, t10, t6$$
$$= +20, -12$$
$$= +8$$

This two byte sequence provides a high value of DSV accumulation relative to that produced by the other allowable modulation sequences specified in the Main Conversion Table.

*Example 4: 0x8e ($142_{10}$) and 0x9e ($158_{10}$)*

Table 4, hereinafter, shows the results (i.e., Code Words) of looking up the 8-bit bytes 0x8e and 0x9e in the Main Conversion table:

TABLE 4

| | State 1 | | | State 2 | | | State 3 | | | State 4 | | |
|---|---|---|---|---|---|---|---|---|---|---|---|---|---|
| | Code Word | | | Code Word | | | Code Word | | | Code Word | | |
| 142 | 0000010000000100 | 3 | | 0000010000000100 | 3 | | 1000000100100100 | 3 | | 1000000100100100 | 3 | |
| 158 | 0010001001000100 | 3 | | 0010001001000100 | 3 | | 1000100100000100 | 3 | | 0100100100000000 | 3 | |

Referring to Table 4, four 16-bit Code Words (corresponding to four different states), each followed by a next state, are provided. Significantly, the next state after state 3 for the 8-bit byte 0x8e is state 3 and the next state after state 3 of the 8-bit byte 0x9e is also state 3. Thus the sequence of 8-bit bytes 0x8e and 0x9e reselects state 3 repeatedly. The state 3 Code Word for the 8-bit byte 0x8e is 1000000100100100 [t7, t3, t3, t2+] and the state 3 Code Word for the 8-bit byte 0x9e is 1000100100000100 [t4, t3, t6, t2+]. The total cumulative DSV for the sequence of 8-bit bytes 0x8e9e or 0x9e8e is:

$$t7, t3, t3, t3, t4, t3, t6, t3$$

$$= +20, -12$$

$$= +8$$

This two byte sequence provides a high value of DSV accumulation relative to that produced by the other allowable modulation sequences specified in the Main Conversion Table.

*Example* 5: *0x95 (149$_{10}$) and 0x9e (158$_{10}$)*

Table 5, hereinafter, shows the results (i.e., Code Words) of looking up the 8-bit bytes 0x95 and 0x9e in the Main Conversion table:

TABLE 5

| | State 1 | | State 2 | | State 3 | | State 4 | |
|---|---|---|---|---|---|---|---|---|
| | Code Word | | Code Word | | Code Word | | Code Word | |
| 149 | 0000100100010000 | 3 | 0000100100010000 | 3 | 1000000000100000 | 3 | 1000000000100000 | 3 |
| 158 | 0010001001000100 | 3 | 0010001001000100 | 3 | 1000100100000100 | 3 | 0100100100000000 | 3 |

Referring to Table 5, four 16-bit Code Words (corresponding to four different states), each followed by a next state, are provided. Significantly, the next state after state 3 for the 8-bit byte 0x95 is state 3 and the next state after state 3 of the 8-bit byte 0x9e is also state 3. Thus the sequence of 8-bit bytes 0x95 and 0x9e reselects state 3 repeatedly. The state 3 Code Word for the 8-bit byte 0x95 is 1000000000100000 [t10, t5+] and the state 3 Code Word for the 8-bit byte 0x9e is 1000100100000100 [t4, t3, t6, t2+]. The total cumulative DSV for the sequence of 8-bit bytes 0x959e or 0x9e95 is:

$$t10, t6, t4, t3, t6, t3$$
$$= +20, -12$$
$$= +8$$

This two byte sequence provides a high value of DSV accumulation relative to that produced by the other allowable modulation sequences specified in the Main Conversion Table.

The present inventor has also identified a particularly suitable Code Word in the Main Conversion Table that, when optically read repeatedly, is capable of generating a sufficient level of HF noise during data retrieval or playback such that tracking will be lost. The 8-bit byte (prior to EFM+ modulation during encoding of a DVD) that corresponds to this Code Word is:

- 0x62

The Code Word corresponding to the 8-bit byte 0x62 comprises an odd number of transitions. Repeating this Code Word causes a high rate of pit-to-land and land-to-pit transitions with a minimum pit length of 3T. Every second repeated byte negates any DSV accumulation from the first, so that the effective DC content or bias is zero. The above example is described in further detail, hereinafter.

*Example 6: 0x62 ($98_{10}$)*

Table 6, hereinafter, shows the results (i.e., Code Words) of looking up the 8-bit byte 0x62 in the Main Conversion table:

TABLE 6

| | State 1 | | State 2 | | State 3 | | State 4 | |
|---|---|---|---|---|---|---|---|---|
| | Code Word | | Code Word | | Code Word | | Code Word | |
| 98 | 0010010010010010 | 1 | 0000100100010000 | 1 | 1001001000000100 | 2 | 1001001000000100 | 2 |

Referring to Table 6, four 16-bit Code Words (corresponding to four different states), each followed by a next state, are provided. In this case, it is required to ensure that the next state selected is always 1. Accordingly, it must be ensured to start after a SYNC marker (i.e., to ensure selection of state 1 or column 1) or that the data stream in the case of a state 3 or 4 Code Word be prefixed with a value that will always yield a next selection of a state 1 or state 2 Code Word. An example is the 8-bit value of $95_{10}$ or 0x5f, with which all next states would be state 1.
The state 1 Code Word for the 8-bit byte 0x62 is 0010010010010010 [t3, t3, t3, t3, t3, t1+]. The total cumulative DSV for two successive 0x62 8-bit bytes is thus:

$$t3, t3, t3, t3, t3, (t1+t3=t4), t3, t3, t3, t3, (t1)$$

$$= +16+, -16$$

$$= +0$$

This byte provides a high value of HF noise relative to that produced by the other allowable modulation sequences specified in the Main Conversion Table.
The present inventor has identified a particularly suitable Code Word in the Main Conversion Table that contains T11s followed by T3s and that, when optically read repeatedly, is capable of generating a sufficient level of C3PO to cause a loss of tracking during retrieval. The 8-bit byte sequence (prior to EFM+ modulation during encoding of a DVD) that corresponds to this Code Word is 0xabcf (i.e., 0xab followed by 0xcf, and repeated as necessary). The above example is described in further detail, hereinafter.

*Example 7: 0xab($171_{10}$) and 0xcf($207_{10}$)*

Table 7, hereinafter, shows the results (i.e., Code Words) of looking up the 8-bit bytes 0xab and 0xcf in the Main Conversion table:

TABLE 7

|     | State 1 | | State 2 | | State 3 | | State 4 | |
| --- | --- | --- | --- | --- | --- | --- | --- | --- |
|     | Code Word | | Code Word | | Code Word | | Code Word | |
| 171 | 0010001000001001 | 1 | 0100100000100000 | 3 | 0010001000001001 | 1 | 0100100000100000 | 3 |
| 207 | 0000010010001000 | 2 | 0100001000010001 | 1 | 0000010010001000 | 2 | 0100001000010001 | 1 |

Referring to Table 7, four 16-bit Code Words (corresponding to four different states), each followed by a next state, are provided. Significantly, the next state after state 2 of the 8-bit byte 0xab is 3 and the next state after state 3 for the 8-bit byte 0xcf is state 2. Thus, the sequence of 8-bit bytes 0xab and 0xcf reselects states 3 and 2 repeatedly. The state 2 Code Word for the 8-bit byte 0xab is 0100100000100000 [t2+, t3, t6, t5+] and the state 3 Code Word for the 8-bit byte 0xcf is 0000010010001000 [t6+, t3, t4, t3+]. When encoded, the foregoing two Code Words will combine as follows:

   t3, t6, t11, t3, t4, t5

As can be seen from the combined sequence above, the laser will burn a T11 effect, immediately followed by a T3 rest, immediately followed by burning of a T4 effect. This long burn effect with a short rest period immediately followed by another burn effect causes two artifacts. Firstly, the dye and polymer are overheated in the localized region and the pit or mark definition (i.e., its width) will be sub-optimal, resulting in an incorrect representation of the data and subsequent errors during both reading and writing of the target data stream. Those skilled in the art will recognize that care must be exercised to ensure correct polarity of the laser beam when burning a disc. That is, the laser beam must be active (on) to create the marks or pits (e.g., during the long T11 period). After a short period of laser activation, overexposure will take place due to the laser duty cycle and the T11 mark or pit will "grow" into the following T3 space and eventually yield an artifact that causes instability and erroneous read back.

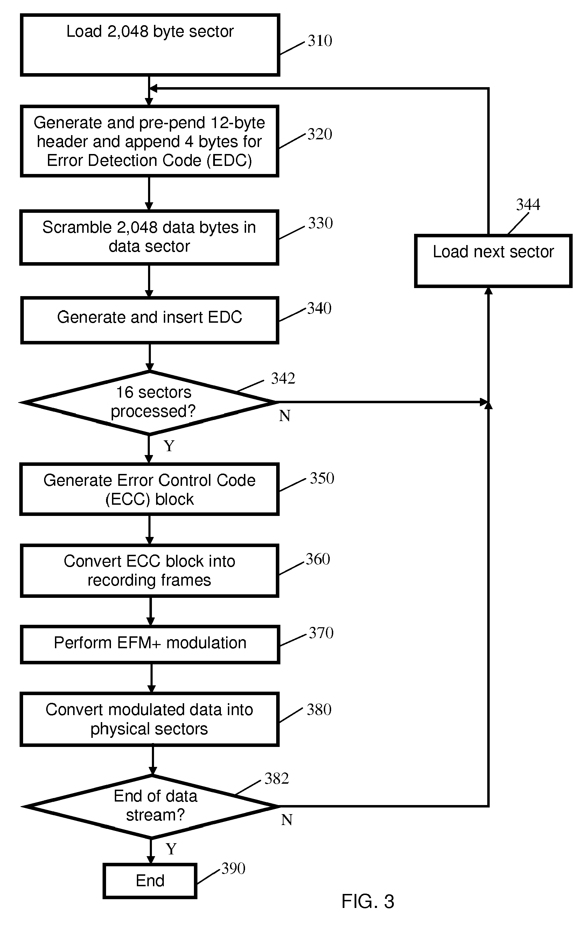

Fig. 3 is a flow diagram of a method for encoding data into ECC blocks for writing to a DVD. More specifically, the method of Fig. 3 may be used to encode data sequences/s such as the DSV, HF and C3PO generating data sequences described hereinbefore for writing to selected areas or zones of a recordable DVD.

The data is loaded in 2,048-byte sectors and processed in accordance with the relevant ECMA standard/s. The data is processed in blocks of 16 sectors at a time as Error Control Code (ECC) Blocks and recording frames generated each comprise 16 sectors.

Referring to Fig. 3, a 2,048 byte sector is loaded at step 310. The data sequence may comprise a multiple sectors, a single sector or a portion of a sector. At step 320, a 12-byte header is generated and pre-pended and four bytes for Error Detection Code (EDC) check bytes are appended to the selected data sector to form a 2064-byte data frame. The header comprises an ID field (4 bytes), an IED field that comprises an error detection code covering the ID (2 bytes), and a RESERVED field that contains Copyright Management Information (6 bytes). The RESERVED field is referred to as the CPR_MAI field in certain specifications such as ECMA-267.

At step 330, the 2,048 data bytes in the selected data sector are scrambled, with the scrambler codec Initialization Vector (IV) preset to a specified value, which is seeded by bits 7-4 of the selected sector's ID. Accordingly, the ECC block that contains the selected sector determines the scrambler codec's IV. The scrambler is defined, for example, on page 25 of the ECMA-267 specification and comprises a feedback shift register.

At step 340, the Error Detection Code (EDC) is generated and inserted into the 4 bytes allocated in step 320.

At step 342, a determination is made whether 16 sectors have been processed as this would be indicative of an ECC block boundary. If not (N), the next sector is selected at step 344 and processing reverts to step 320. If 16 sectors have been processed (Y), at step 342, processing continues at step 350.

At step 350, an Error Control Code (ECC) block is generated, as per the ECMA-specifications, being an array having 192 rows of 172 bytes. 16 bytes of Parity Outer (PO) code words are appended to each of the 172 columns and 10 bytes of Parity Inner (PI) code words are appended to each of the resulting 208 rows. A complete ECC block thus comprises 208 rows of 182 bytes per row, which gives a total of 37,856 bytes per ECC block.

At step 360, the ECC block is converted into recording frames by interleaving one of the 16 PO rows after each 12 rows of an ECC block. This is performed by relocation of the bytes as defined in the ECMA standards. At completion of step 360, there exist 16 recording frames, each comprising 2,366 bytes in an array of 13 rows of 182 bytes from the respective previously generated ECC block.

At step 370, the 8-bit bytes of each recording frame are transformed into 16-bit code words using Eight-to-Sixteen Modulation (EFM+) for writing to the optical media or DVD.

At step 380, the EFM+ modulated data generated in step 470 is converted into physical sectors for transferring to the optical media or DVD. This includes the insertion of two synchronization (SYNC) words at the start of each 1,456 bits (91 bytes).

At step 382, a determination is made the end of the data stream has been reached. If not (N), the next sector is selected at step 344 and processing reverts to step 320. If there is no more data to be processed (N), the method ends at step 390. Those skilled in the art will appreciate that various methods other than the method described hereinbefore with reference to Fig. 3 may alternatively be used for encoding and/or writing the predetermined data sequences/s to selected areas or zones of a recordable DVD. In some cases, ECC blocks may not be used and/or the data sequence/s may be written by accessing individual data storage locations.

An ECC block is formed by arranging 16 consecutive Scrambled Frames in an array of 192 rows of 172 bytes each. Sixteen bytes of Parity Outer (PO) Code are added to each of the 172 columns and then 10 bytes of Parity Inner (PI) Code are added to each of the resulting 208 rows. Thereafter, the PI columns and PO rows are interleaved in the columns and rows, respectively. The PI and PO Code symbols are generated by means of a Reed Solomon Product Code (RSPC), which provides error correction capability. A maximum of 5 errors per row and 8 errors per column can be corrected. Generation of the Error Control Code (ECC) blocks may cause the data sequence to be dispersed across more than one row of a particular ECC block and be interrupted (i.e., broken-up) by the parity information. For example, the PI code bytes may result in multiple reduced run-lengths of the data sequence and may act to reverse the effect intended to be generated by the presence of the data sequence (e.g., the polarity of the DSV accumulation may be reversed by the PI code bytes). Testing by the present inventor on commercially available DVD drives has indicated that in certain scenarios it can take up to 16 sectors of continuous DSV accumulation to cause sufficient loss of focus and/or tracking to prevent retrieval of a wobble frequency signal. This is partly due to the efficiency of the ECC system in correcting errors and partly due to the effects of the PI and/or PO code bytes. The purpose of Enhanced Content Protection (ECP) is to prevent or at least ameliorate unwanted effects of parity information embedded within a desired data sequence due to error control coding.

In ECP, the parity code bytes are selected to maintain a run of DSV, HF and/or C3PO by manipulation of their value and/or position in the data that is used to generate the parity code bytes. In the case of PI, any of the 172 bytes of data that precede the 10 bytes of parity may be manipulated in value and/or position to obtain a suitable sequence of parity code bytes. In other words, the position and/or value of certain bytes in the data that the parity covers is/are manipulated such that the parity bytes contain values that maintain both the DSV, HF and/or C3PO accumulation and the connection rules of EFM+ coding.

As an example (for the case of a DSV generating predetermined data sequence to be inserted in a single row of a selected ECC block), the 172 data bytes of the row may be replaced with the DSV generating value 0x8e. Thereafter, 10 bytes of PI code will be generated and appended to the end of the row. The generated PI code bytes may comprise non-DSV generating bytes or may even comprise values that reverse a DSV accumulation. By an iterative process, various bytes may be selected for replacing the data bytes that are used to generate the parity information for that row. The position of the selected replacement bytes may be altered throughout the row until a suitable sequence of code words results. A suitable sequence in this instance may be a run length of 10 parity bytes or symbols that increase, or at least maintain, the current level of HF, DSV and/or C3PO accumulation.

It should be noted that ECP can optionally be expanded to be performed on the columns of an ECC block. This provides the ability to replace PO code bytes so that, in the event of the data sequence spanning more than one row or sector, interleaved PO columns also do not reverse the desired copy protection effect such as DSV accumulation.

The present inventor has discovered that the use of ECP enables sufficiently effective disruptive effects (e.g., non-detection of a wobble frequency) to be generated within a single sector. The ability to ensure that the disruptive data sequence continues through the parity code bytes without disrupting the ECC system provides a significant advantage as this counters a main in-built defense to stop such data streams from causing the problems that they would without such suppression mechanisms. The number of altered data and/or parity bytes in a particular row or column should exceed the error correcting capability for that row or column.

The data sequence may be written to the same area multiple times. This is particularly applicable in the case of C3PO data sequences, which enlarges the pits on the DVD storage media with each successive write.

The density of the EFM+ encoding may be altered when writing to the relevant areas on the DVD. For example, the pits may be increased or decreased in length by a factor such as, say, 10% or 33%. Increased length causes the base speed of the DVD to increase, whereas decreased length causes the base speed of the DVD to decrease. Each of the foregoing cause a shift in linear velocity of the DVD and a consequent shift of the wobble frequency, thus causing the DVD drive to assume that the loaded DVD is non-recordable.

In other embodiments of the present invention, relevant areas on the DVD that contain drive-specific information are overwritten to cause the EFM+ data stream retrieved by the DVD drive from those areas to be corrupted. If the disk calibration area in the Lead-In Area is overwritten (i.e., corrupted), the DVD drive will fail to detect a valid wobble frequency and will thus assume that the loaded DVD is non-recordable.

In other embodiments of the present invention, the data sequence written to the relevant areas on the DVD comprises a predetermined DSV generating data sequence that alters the EFM+ crossover point. This is analogous to generating a DC offset, thereby causing incorrect symbol decoding and/or hindering tracking and focus. The DVD drive is thus unable to accurately detect the wobble signal and assumes that the loaded DVD is non-recordable.

A further embodiment of the present invention relates to dual layer DVD recordable media. In this embodiment, the same data sequence or different data sequences is/are written to areas of first and second layers of the recordable DVD storage media that are adjacent to each other. For example, the logical data location 0x2f000 on Layer 0 corresponds to the logical data location fd0fff on Layer 1. Both data locations are physically located at the same radial offset from the centre of the DVD storage media, however, Layer 1 is "below" Layer 0 to the read back laser located below Layers 0 and 1. Accordingly, writing of predetermined data sequences, such as DSV, HF and/or C3PO, from logical location fd0fff on Layer 1 would also hinder or prevent data retrieval from logical location 0x2f000 on Layer 0.

In other embodiments, the data used to identify DVD storage media as recordable may be physically occluded by masking a portion of an optical surface of the recordable DVD storage media. For example, a portion of the optical surface of the recordable DVD storage media immediately below the relevant area may be masked by means of printing or another optical barrier means. Such optical barriers may be created by the application of ink, paint or any other suitable material using an inkjet printer, screen printing, etc.

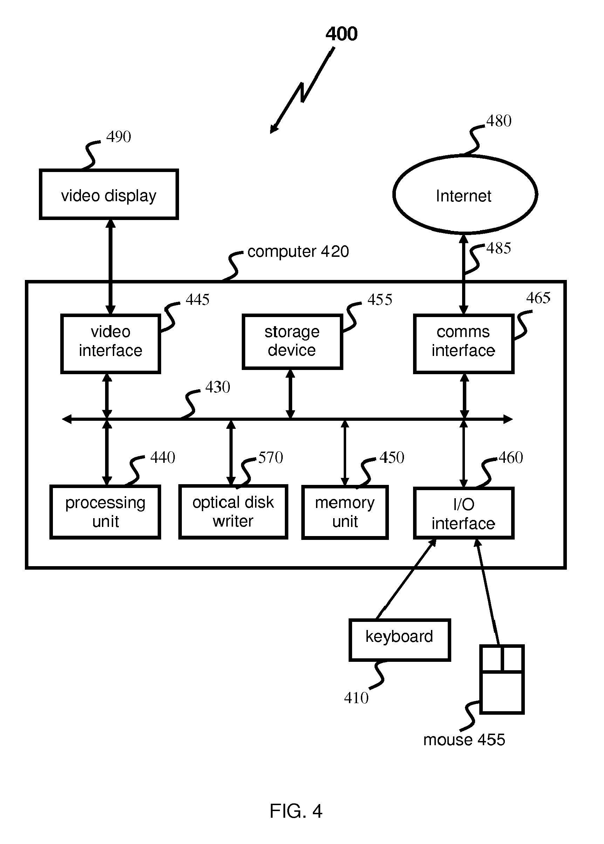

Fig. 4 shows a schematic block diagram of a computer system 400 that can be used to practice certain of the methods described herein. More specifically, the computer system 400 may be used to execute computer software that is programmed to assist in performing a method for causing recordable DVD storage media to be identified as non-recordable DVD storage media by a DVD drive. The computer software executes under an operating system such as MS Windows XP™, MS Windows Vista™, or Linux™ installed on the computer system 400.

The computer software involves a set of programmed logic instructions that may be executed by the computer system 400 for instructing the computer system 400 to perform predetermined functions specified by those instructions. The computer software may be expressed or recorded in any language, code or notation that comprises a set of instructions intended to cause a compatible information processing system to perform particular functions, either directly or after conversion to another language, code or notation.

The computer software program comprises statements in a computer language. The computer program may be processed using a compiler into a binary format suitable for execution by the operating system. The computer program is programmed in a manner that involves various software components, or code, that perform particular steps of the methods described hereinbefore.

The components of the computer system 400 comprise: a computer 420, input devices 410, 415 and a video display 490. The computer 420 comprises: a processing unit 440, a memory unit 450, an input/output (I/O) interface 460, a communications interface 465, a video interface 445, a storage device 455, and an optical disk writer 470. The computer 420 may comprise more than one of any of the foregoing units, interfaces and devices.

The processing unit 440 may comprise one or more processors that execute the operating system and the computer software executing under the operating system. The memory unit 450 may comprise random access memory (RAM), read-only memory (ROM), flash memory and/or any other type of memory known in the art for use under direction of the processing unit 440. The optical disk writer 470 may comprise a DVD drive. Alternatively or additionally, an external optical disk writer or DVD drive (not shown) may be coupled to the computer system 400.

The video interface 445 is connected to the video display 490 and provides video signals for display on the video display 490. User input to operate the computer 420 is provided via the input devices 410 and 415, comprising a keyboard and a mouse, respectively. The storage device 455 may comprise a disk drive or any other suitable non-volatile storage medium.

Each of the components of the computer 420 is connected to a bus 430 that comprises data, address, and control buses, to allow the components to communicate with each other via the bus 430.

The computer system 400 may be connected to one or more other similar computers via the communications interface 465 using a communication channel 485 to a network 480, represented as the Internet.

The computer software program may be provided as a computer program product, and recorded on a portable storage medium. In this case, the computer software program is accessible by the computer system 400 from the storage device 455. Alternatively, the computer software may be accessible directly from the network 480 by the computer 420. In either case, a user can interact with the computer system 400 using the keyboard 410 and mouse 415 to operate the programmed computer software executing on the computer 420.

The computer system 400 has been described for illustrative purposes. Accordingly, the foregoing description relates to an example of a particular type of computer system such as a personal computer (PC), which is suitable for practicing the methods and computer program products described hereinbefore. Those skilled in the computer arts would readily appreciate that alternative configurations or types of computer systems and computer work stations may be used to practice the methods and computer program products described hereinbefore.

Embodiments of the present invention provide methods, computer systems and computer programs for causing recordable DVD storage media to be identified as non-recordable DVD storage media by a DVD drive. The embodiments occlude data used to identify the recordable DVD storage media as being recordable from being correctly retrieved from the recordable DVD storage media by the DVD drive.

In certain embodiments, the data is occluded by masking a portion of an optical surface of said recordable DVD storage media. The masking may comprise printing over a portion of the optical surface.

In other embodiments, the data is occluded by writing a data sequence to an area on said recordable DVD storage media, said area comprising data storage locations useable by said DVD drive to determine whether said DVD storage media is recordable or non-recordable. The occluded data may comprise a predefined wobble frequency or Land Pre Pit (LPP) data.

The area that the data sequence is written to may comprise an Inner Drive Area of the recordable DVD storage media.

The area that the data sequence is written to may comprise certain or all data storage locations that precede a Lead-In Zone of the recordable DVD storage media.

The area that the data sequence is written to may comprise certain or all data storage locations on the recordable DVD storage media that precede physical sector number 0x2A480.

The area that the data sequence is written to may comprise certain or all data storage locations that precede a Reference Code Zone of the recordable DVD storage media.

The area that the data sequence is written to may comprise certain or all data storage locations on the recordable DVD storage media that precede physical sector number 0x2f000.

The data may be occluded by writing the data sequence to the area a plurality of times.

The density of EFM+ encoding of the data sequence to be written to the recordable DVD storage media may be altered.

The data sequence may be written to an area on a first layer of the recordable DVD storage media, and a data sequence may further be written to an area on a second layer of the recordable DVD storage media, wherein the area on the second layer is adjacent to the area on the first layer. The second layer may be directly above or below the area on the first layer.

The data sequence to may be written to an area on the recordable DVD storage media that is adjacent to data storage locations useable by the DVD drive to determine whether the DVD storage media is recordable or non-recordable. Furthermore, the area may be located on a different layer to the data storage locations of the recordable DVD storage media. The area may be directly above or below the data storage locations.

The data sequence may comprise one or more predefined data sequence/s from the group of predefined data sequences consisting of: a Digital Sum Value (DSV) generating data sequence, a High Frequency (HF) noise generating data sequence and a data sequence that causes pit overexposure in said DVD storage media.

For example, the data sequence may comprise at least one Content Word defined in the Main Conversion table of the ECMA-267 specification repeated a plurality of times.

For example, the data sequence may comprise a Content Word that corresponds to the data sequence 0x95 in the Main Conversion Table of the ECMA-267 specification.

For example, the data sequence may comprise Content Words from the Main Conversion Table of the ECMA-267 specification that correspond to one of the data sequences in the list of data sequences consisting of: 0xc5 and 0x5c; 0x89 and 0x95; 0x8e and 0x9e; and 0x95 and 0x9e.

For example, the data sequence may comprise at least one Content Word from the Main Conversion Table of the ECMA-267 specification that corresponds to one or more data sequences in the list of data sequences consisting of: 0x83; 0x87; 0x89; 0x8e; 0x95; and 0x9e.

For example, the data sequence may comprise a Content Word that corresponds to the data sequence 0x62 in the Main Conversion Table of the ECMA-267 specification.

For example, the data sequence may comprise a Content Word that corresponds to the data sequence 0xabcf in the Main Conversion Table of the ECMA-267 specification.

In one embodiment, a computer system comprising a memory unit for storing data and instructions to be performed by a processing unit, a DVD unit for writing data to recordable DVD storage media, and a processing unit coupled to the memory unit and the DVD unit is used to cause recordable DVD storage media to be identified as non-recordable DVD storage media by a DVD drive, as described above.

A small number of embodiments of methods, systems and computer program products have been described hereinbefore for causing recordable DVD storage media to be identified as non-recordable DVD storage media by a DVD drive. The embodiments described advantageously do not require modification to a conventional or commercially available DVD drive and simply require occluding data used to identify the recordable DVD storage media as being recordable from being correctly retrieved from the recordable DVD storage media by the DVD drive. No change is required to be made to the physical structure of the DVD storage media. Certain embodiments described hereinbefore refer to a data sequence that is written to the DVD storage media. It should be understood that such a data sequence may comprise a single byte or multiple bytes of data. Furthermore, the data sequence may comprise multiple data sub-sequences, which may be written to the DVD storage media.

The foregoing description provides exemplary embodiments only, and is not intended to limit the scope, applicability or configurations of the present invention. Rather, the description of the exemplary embodiments provides those skilled in the art with enabling descriptions for implementing an embodiment of the invention. Various changes may be made in the function and arrangement of elements without departing from the spirit and scope of the invention as set forth in the claims hereinafter.

Where specific features, elements and steps referred to herein have known equivalents in the art to which the invention relates, such known equivalents are deemed to be incorporated herein as if individually set forth. Furthermore, features, elements and steps referred to in respect of particular embodiments may optionally form part of any of the other embodiments unless stated to the contrary.

The term "comprising" as used in the present specification is intended to have the open-ended non-exclusive meaning of "including principally, but not necessarily solely" and not the meaning of "consisting essentially of" or "consisting solely of". Grammatical variations of the term "comprising", such as "comprise, comprises" and "is comprised of", are intended to have corresponding meanings.

**Claims**

1. A method for causing recordable DVD storage media to be identified as non-recordable DVD storage media by a DVD drive, said method comprising occluding data used to identify said recordable DVD storage media as being recordable from being correctly retrieved from said recordable DVD storage media by said DVD drive.

2. The method of claim 1, wherein said data is occluded by writing a data sequence to an area on said recordable DVD storage media, said area comprising data storage locations useable by said DVD drive to determine whether said DVD storage media is recordable or non-recordable.

3. The method of claim 2, wherein said occluded data comprises a predefined wobble frequency.

4. The method of claim 2, wherein said occluded data comprises Land Pre Pit (LPP) data.

5. The method of claim 2, wherein said area comprises data storage locations on said recordable DVD storage media that precede physical sector number 0x2f000.

6. The method of claim 2, further comprising altering density of EFM+ encoding of said data sequence to be written to said recordable DVD storage media.

7. The method of claim 2, wherein said data sequence is written to an area on a first layer of said recordable DVD storage media, and a data sequence is further written to an area on a second layer of said recordable DVD storage media, wherein said area on said second layer is adjacent to said area on said first layer.

8. The method of claim 7, wherein said area on said second layer is directly above or below said area on said first layer.

9. The method of claim 2, wherein said data sequence comprises one or more predefined data sequence/s from the group of predefined data sequences consisting of:

   a Digital Sum Value (DSV) generating data sequence, a High Frequency (HF) noise generating data sequence and a data sequence that causes pit overexposure in said DVD storage media.

10. A computer system for causing recordable DVD storage media to be identified as non-recordable DVD storage media by a DVD drive, said computer system comprising:

    a memory unit for storing data and instructions to be performed by a processing unit;
    a DVD unit for writing data to recordable DVD storage media; and
    a processing unit coupled to said memory unit and said DVD unit;

    wherein said processing unit is programmed to occlude data used to identify said recordable DVD storage media as being recordable from being correctly retrieved from said recordable DVD storage media by said DVD drive.

11. The computer system of claim 10, wherein said processing unit is programmed to occlude said data by causing said DVD unit to write a data sequence to an area on said recordable DVD storage media, said area comprising data storage locations useable by said DVD drive to determine whether said DVD storage media is recordable or non-recordable.

12. The computer system of claim 11, wherein said occluded data comprises a predefined wobble frequency.

13. The computer system of claim 11, wherein said occluded data comprises Land Pre Pit (LPP) data.

14. The computer system of claim 11, wherein said data sequence comprises one or more predefined data sequence/s from the group of predefined data sequences consisting of: a Digital Sum Value (DSV) generating data sequence, a High Frequency (HF) noise generating data sequence and a data sequence that causes pit overexposure in said DVD storage media.

15. A computer program product comprising a computer readable medium comprising a computer program recorded therein for causing recordable DVD storage media to be identified as non-recordable DVD storage media by a DVD drive, said computer program product comprising computer program code means for performing a method according to any of the claims 1 to 9.

190

Occlude data used to
identify DVD storage
media as recordable

**100**

101

104        108

102      106      110

| | | | | | Information Zone 112 | |

Inner Drive Area 120

Lead-In Zone 130                    Lead-Out Zone 150

114

| | | Data Zone 140 | | |

Outer Drive Area 160

| | RCZ 170 | CDZ 180 |

FIG. 1

FIG. 2a

FIG. 2b

```
┌─────────────────────────┐
│   Load 2,048 byte sector │──── 310
└─────────────────────────┘
            │
            ▼
┌─────────────────────────────┐
│ Generate and pre-pend 12-byte│──── 320
│ header and append 4 bytes for│
│ Error Detection Code (EDC)   │
└─────────────────────────────┘
            │
            ▼
┌─────────────────────────────┐          344
│ Scramble 2,048 data bytes in │──── 330    │
│      data sector             │      ┌──────────────────┐
└─────────────────────────────┘      │ Load next sector │
            │                         └──────────────────┘
            ▼
┌─────────────────────────────┐──── 340
│   Generate and insert EDC    │
└─────────────────────────────┘
            │
            ▼
         ╱───────╲   342
        ╱ 16 sectors╲
        ╲ processed? ╱──── N
         ╲───────╱
            │ Y
            ▼
┌─────────────────────────────┐──── 350
│ Generate Error Control Code  │
│        (ECC) block           │
└─────────────────────────────┘
            │
            ▼
┌─────────────────────────────┐──── 360
│   Convert ECC block into     │
│      recording frames        │
└─────────────────────────────┘
            │
            ▼
┌─────────────────────────────┐──── 370
│  Perform EFM+ modulation     │
└─────────────────────────────┘
            │
            ▼
┌─────────────────────────────┐──── 380
│ Convert modulated data into  │
│      physical sectors        │
└─────────────────────────────┘
            │
            ▼
         ╱───────╲   382
        ╱ End of data╲
        ╲  stream?   ╱──── N
         ╲───────╱
            │ Y
            ▼
      ┌─────────┐──── 390
      │   End   │
      └─────────┘
```

FIG. 3

**400**

FIG. 4

Europäisches
Patentamt

European
Patent Office

Office européen
des brevets

# EUROPEAN SEARCH REPORT

Application Number

EP 08 16 3323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/154682 A1 (TAYLOR JAMES H [US]) 14 July 2005 (2005-07-14) * paragraphs [0044] - [0049] * | 1-4, 10-13,15 | INV. G11B20/00 G11B20/12 G11B19/12 G11B27/24 |
| X | WO 2007/010987 A (PIONEER CORP [JP]; KURODA KAZUO [JP]) 25 January 2007 (2007-01-25) * paragraph [0082]; figure 8 * | 1-3, 10-12,15 | |
| X | US 2003/039187 A1 (GEUTSKENS YOERI BAS [NL]) 27 February 2003 (2003-02-27) * paragraphs [0003], [0028] - [0037] * | 1,2,10, 11,15 | |
| P,X | WO 2008/029341 A (KONINKL PHILIPS ELECTRONICS NV [NL]; BENTVELSEN PETRUS H C [NL]; BROND) 13 March 2008 (2008-03-13) * page 2, lines 2-15 * * page 12, lines 5-10 * * page 13, lines 11-22 * * page 16, line 19 - page 17, line 2 * * page 19, lines 8-32 * * page 20, lines 6-17 * * figures 2,6,10 * | 1-3,7,8, 10-12 | |
| P,X | WO 2008/030002 A (SAMSUNG ELECTRONICS CO LTD [KR]) 13 March 2008 (2008-03-13) * paragraphs [0038] - [0040] * | 1-3 | TECHNICAL FIELDS SEARCHED (IPC) G11B |
| P,X | EP 1 953 753 A (TOSHIBA KK [JP]) 6 August 2008 (2008-08-06) * paragraph [0159] * | 1,2 | |
| A | EP 1 672 631 A (SONY DADC AUSTRIA AG [AT]) 21 June 2006 (2006-06-21) * figures 1,2 * | 6,9,14 | |
| A | EP 1 600 964 A (MACROVISION EUROP LTD [GB]) 30 November 2005 (2005-11-30) * paragraphs [0006], [0043] - [0053] * | 9,14 | |

The present search report has been drawn up for all claims

| Place of search | Date of completion of the search | Examiner |
|---|---|---|
| The Hague | 10 December 2008 | Hermes, Lothar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 16 3323

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2008

| Patent document cited in search report | | Publication date | Patent family member(s) | | Publication date |
|---|---|---|---|---|---|
| US 2005154682 | A1 | 14-07-2005 | NONE | | |
| WO 2007010987 | A | 25-01-2007 | NONE | | |
| US 2003039187 | A1 | 27-02-2003 | CN | 1547746 A | 17-11-2004 |
| | | | WO | 03019557 A1 | 06-03-2003 |
| | | | JP | 2005501364 T | 13-01-2005 |
| | | | TW | 251211 B | 11-03-2006 |
| WO 2008029341 | A | 13-03-2008 | NONE | | |
| WO 2008030002 | A | 13-03-2008 | US | 2008059985 A1 | 06-03-2008 |
| EP 1953753 | A | 06-08-2008 | CN | 101236751 A | 06-08-2008 |
| | | | JP | 2008186530 A | 14-08-2008 |
| | | | KR | 20080071531 A | 04-08-2008 |
| | | | US | 2008198733 A1 | 21-08-2008 |
| EP 1672631 | A | 21-06-2006 | CN | 1822180 A | 23-08-2006 |
| | | | JP | 2006179166 A | 06-07-2006 |
| | | | US | 2006153052 A1 | 13-07-2006 |
| EP 1600964 | A | 30-11-2005 | AU | 2005201723 A1 | 08-12-2005 |
| | | | CA | 2505505 A1 | 19-11-2005 |
| | | | CN | 1700334 A | 23-11-2005 |
| | | | GB | 2414337 A | 23-11-2005 |
| | | | JP | 2005332567 A | 02-12-2005 |
| | | | KR | 20060047992 A | 18-05-2006 |
| | | | NZ | 539686 A | 27-10-2006 |
| | | | US | 2005270190 A1 | 08-12-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 96691707 P
- US 78163106 P
- AU 2007000306 W
- US 966917 P
- US 781631 P